# EUROPÄISCHE PATENTSCHRIFT

(11) **EP 2 756 772 B1**
(45) Veröffentlichungstag und Bekanntmachung des Hinweises auf die Patenterteilung: **15.03.2017**
(21) Anmeldenummer: 13181407.1
(22) Anmeldetag: 22.08.2013
(51) Int. Cl.: A01K 27/00, A44B 11/25, A44B 11/26

(54) **Steckverschluss zum Verbinden von Strangelementen und eine Tierhalteleine mit einem solchen Steckverschluss**
Buckle for connecting strand elements and an animal leash with such a buckle
Fermeture par encliquetage pour relier des éléments de chaîne et laisse animalière dotée d'une telle fermeture par encliquetage

(30) Priorität: 16.01.2013 DE 102013000590
(43) Veröffentlichungstag der Anmeldung: 23.07.2014
(73) Patentinhaber: Flexi-Bogdahn Technik GmbH & Co. KG, 22941 Bargteheide (DE)
(72) Erfinder: Bogdahn, Manfred, 22391 Hamburg (DE); Dib, Essaid, 20539 Hamburg (DE)
(74) Vertreter: Tappe, Udo

(56) Entgegenhaltungen:
- DE-A1-102005 031 522
- FR-A- 1 066 710
- GB-A- 2 079 359
- US-A1- 2009 070 973

## Beschreibung

Die durch die Patentansprüche definierte Erfindung , betrifft einen Steckverschluss zum Verbinden flexibler und/oder starrer Strangelemente, insbesondere einer Tierhalteleine, mit einem Steckteil und einem Aufnahmeteil, wobei zum Herstellen einer lösbaren Verbindung des Steckteils mit dem Aufnahmeteil eine formschlüssige Verbindung zum Übertragen einer Zugkraft und eine von der formschlüssigen Verbindung separate Sicherung zum Verhindern eines unerwünschten Lösens der formschlüssige Verbindung vorgesehen ist, wobei die Sicherung einen Betätigungsmechanismus zum Lösen der Sicherung hat, und für die formschlüssige Verbindung zwei korrespondierend zueinander ausgebildete, starre Formschlusselemente vorgesehen sind, wobei das Steckteil ein erstes Formschlusselement und das Aufnahmeteil ein zweites Formschlusselement zum Zusammenwirken mit dem ersten Formschlusselement hat.

Ein derartiger Steckverschluss ist aus der GB 2 079 359 A bekannt. Des Weiteren ist aus der DE 11 2008 000 099 T5 ein Steckverschluss bekannt bei dem die Verbindung mittels an Biegarmen angeordneten Halteköpfen realisiert ist, die dem Steckteil zugeordnet sind und in Aufnahmen des Aufnahmeteils einrasten.

Nachteilig ist hierbei, dass die Biegearme einerseits zum Bereitstellen einer federnden Lagerung einen geringen Querschnitt aufweisen und andererseits bei einer Zugbelastung des Steckverschlusses die gesamte Zugkraft aufnehmen müssen. Somit müssen die Biegearme eine Doppelfunktion erfüllen. Hierbei besteht die Gefahr, dass aufgrund der zum Lösen der Rastverbindung notwendigen elastischen Ausbildung der Biegearme sich diese bei einer hinreichenden Zugkraft derart verbiegen oder brechen, dass das Steckteil unerwünscht von dem Aufnahmeteil gelöst wird.

Es ist daher die der Erfindung zugrunde liegende Aufgabe, einen Steckverschluss der eingangs genannten Art derart weiter zu entwickeln, dass eine unerwünschte Trennung der Verbindung des Steckteils von dem Aufnahmeteil auch bei höheren Zugkräften vermieden ist, wobei gleichzeitig eine einfache Bedienbarkeit und kostengünstige Herstellung ermöglicht ist.

Die der Erfindung zugrunde liegende Aufgabe wird durch einen Steckverschluss der eingangs genannten Art gelöst, wobei innerhalb des Steckteils ein Befestigungselement zum Befestigen eines Endes eines Strangelementes ist, wobei das Befestigungselement in einer dem ersten Formschlusselement zugeordneten Befestigungsaufnahme zum Verdecken der Befestigung des Endes des Strangelementes befestigbar ist

Hierbei ist von Vorteil, dass zusätzlich zu der formschlüssigen Verbindung eine separate Sicherung vorgesehen ist. Vorzugsweise stellt die Sicherung eine Verbindung zwischen dem Steckteil und dem Aufnahmeteil her. Die Gefahr einer unerwünschten Trennung der Verbindung des Steckteils mit dem Aufnahmeteil ist hierdurch deutlich reduzierbar. Vorzugsweise dient die separate Sicherung als eine zusätzliche Rastverbindung, um ein ungewolltes Lösen der, insbesondere formschlüssigen, Verbindung des Steckteils mit dem Aufnahmeteil zu verhindern. Insbesondere dient die Sicherung ausschließlich zum Sichern der formschlüssigen Verbindung, um ein unerwünschtes Trennen der die formschlüssige Verbindung realisierenden Formschlusselemente zu verhindern. Hierbei nimmt die Sicherung vorzugsweise keine Kräfte auf, die bei einer Zugbelastung des Steckverschlusses entstehen. Vorzugsweise werden sämtliche Kräfte oder ein Großteil der Kräfte bei einer Zugbelastung des Steckverschlusses von der formschlüssigen Verbindung aufgenommen und/oder weitergeleitet. Insbesondere ist die Sicherung von der formschlüssigen Verbindung räumlich beabstandet. Somit ist die Sicherung beispielsweise nicht in die formschlüssige Verbindung integriert. Aufgrund einer räumlichen und/oder funktionalen Trennung der Sicherung von der formschlüssigen Verbindung kann die Bedienbarkeit verbessert sein. Vorzugsweise ergibt sich aufgrund der räumlichen Trennung eine zuverlässigere Verbindung des Steckteils mit dem Aufnahmeteil. Insbesondere ist die Verbindung des Steckteils mit dem Aufnahmeteil nur bei einer gleichzeitigen, vorzugsweise räumlich und/oder funktional getrennten, Betätigung des Steckverschlusses zum Trennen der durch die Sicherung entstehenden Verbindung einerseits und der formschlüssigen Verbindung andererseits lösbar. Insbesondere hat die Sicherung eine in Bezug zur formschlüssigen Verbindung separaten, eigenständigen und/oder unabhängigen Betätigungsmechanismus. Vorzugsweise muss zum Trennen des Steckteils von dem Aufnahmeteil zunächst die Sicherung mittels des Betätigungsmechanismus gelöst werden. Anschließend ist die formschlüssige Verbindung aufgrund der gelösten Sicherung ebenfalls lösbar. Vorzugsweise ist die Verbindung des Steckteils mit dem Aufnahmeteil ausschließlich bei einer gleichzeitigen Herstellung und/oder Trennung der Sicherung und der formschlüssigen Verbindung herstellbar und/oder lösbar.

Des weiteren ist von Vorteil, dass zum Aufnehmen und/oder Weiterleiten einer auf den Steckverschluss wirkenden Zugkraft eine formschlüssige Verbindung des Steckteils mit dem Aufnahmeteil vorgesehen ist. Vorzugsweise sind die Bestandteile der formschlüssigen Verbindung starr ausgebildet. Hierdurch kann die formschlüssige Verbindung stärker ausgelegt werden und somit höhere Zugkräfte aufnehmen als eine Rastverbindung mit beispielsweise einem elastischen Rastelement. Wahlweise kann das Steckteil und/oder das Aufnahmeteil mit einem beliebigen Anbauteil anstelle eines Strangelementes verbunden sein.

Nach einer weiteren Ausführungsform sind für die formschlüssige Verbindung zwei korrespondierend zueinander, insbesondere starr, ausgebildete Formschlusselemente vorgesehen. Aufgrund einer starren Ausbildung der Formschlusselemente kann der Steckverschluss hohe Zugkräfte, insbesondere von mehr als 1.000 Newton, vorzugsweise von mindestens 1.500 Newton, besonders bevorzugt von mindestens 2.500 Newton aufnehmen und/oder weiterleiten. Hierbei besteht keine Gefahr eines unbeabsichtigten Lösens der formschlüssigen Verbindung aufgrund hoher Zugkräfte. Vorzugsweise hat das Steckteil ein erstes Formschlusselement, insbesondere ein starres Achselement, und das Aufnahmeteil ein zweites Formschlusselement, insbesondere eine starre Achselementaufnahme, zum Zusammenwirken mit dem ersten Formschlusselement. Aufgrund eines Verbindens des ersten Formschlusselementes mit dem zweiten Formschlusselement entsteht eine starre und dennoch lösbare Verbindung.

Die beiden Formschlusselemente können in eine Richtung quer, insbesondere rechtwinklig, zur Längsausrichtung des Steckverschlusses und/oder quer, insbesondere rechtwinklig, zur Zugrichtung einer bei der vorgesehenen Benutzung auf den Steckverschluss wirkenden Zugkraft miteinander verbindbar sein. Vorzugsweise sind die beiden Formschlusselemente zum Herstellen der formschlüssigen Verbindung ineinander einsteckbar. Insbesondere sind die beiden Formschlusselemente in eine Richtung quer, vorzugsweise rechtwinklig, zur Längsausrichtung der miteinander zu verbindenden Strangelemente miteinander verbindbar. Hierdurch ist gewährleistbar, dass sich die formschlüssige Verbindung bei einer Zugbelastung des Steckverschlusses bei der vorgesehenen Benutzung nicht ungewollt lösen kann. Vorzugsweise ist eine Montagerichtung zum Verbinden und/oder Trennen der beiden Formschlusselemente quer, insbesondere rechtwinklig, zu mindestens einer Komponente der Zugkraft bei einer Zugbelastung des Steckverschlusses ausgerichtet. Das erste Formschlusselement kann in das zweite Formschlusselement einführbar und/oder mindestens teilweise durch einen Durchbruch in einer Seitenwand des Aufnahmeteils durchführbar sein. Insbesondere bei einem mindestens teilweisen Durchführen des ersten Formschlusselementes durch einen Durchbruch ergibt sich eine über die Seitenwand hervorstehende Erhebung. Hierdurch wird die Herstellung einer zuverlässigen formschlüssige Verbindung und/oder Verriegelung begünstigt.

Gemäß einer Weiterbildung weisen die beiden Formschlusselemente eine unter Zugbelastung selbstzentrierende und/oder selbstsichernde Gestalt auf. Insbesondere zur Ausbildung dieser sich selbstzentrierenden und/oder selbstsichernden Gestalt hat das erste Formschlusselement mindestens eine Einkerbung und das zweite Formschlusselement mindestens einen zu der Einkerbung korrespondierend ausgebildeten Vorsprung. Vorzugsweise sind die Einkerbung und der Vorsprung derart angeordnet, dass diese bei einer Zugbelastung des Steckverschlusses miteinander zusammenwirken und/oder ineinander eingreifen. In der formschlüssigen Verbindung kann die Einkerbung mindestens teilweise den Vorsprung hintergreifen. Insbesondere bei einer Zugbelastung des Steckverschlusses wird das Risiko eines ungewollten Lösens der formschlüssigen Verbindung aufgrund der den Vorsprung des zweiten Formschlusselementes hintergreifenden Einkerbung des ersten Formschlusselementes weiter reduziert.

Nach einer weiteren Ausführungsform hat das Steckteil und/oder das erste Formschlusselement in der formschlüssigen Verbindung einen in Bezug zu dem Aufnahmeteil nach innen versetzten Bereich zum Bereitstellen einer Vertiefung und/oder einen nach außen versetzten Bereich zum Bereitstellen einer Erhebung. Aufgrund der Vertiefung und/oder der Erhebung ist die Bedienbarkeit und/oder Handhabbarkeit des Steckverschlusses, insbesondere beim Herstellen und/oder Trennen der Verbindung des Steckteils mit bzw. von dem Aufnahmeteil, verbessert. Insbesondere in Kombination mit der von der Vertiefung abgewandt angeordneten Erhebung ergibt sich eine für den Benutzer intuitive Bedienung. Beim Herstellen der Verbindung des Steckteils mit dem Aufnahmeteil erhält der Benutzer aufgrund der sich ergebenden Erhebung und/oder Vertiefung eine Rückmeldung hinsichtlich einer korrekt hergestellten Verbindung. Beim Trennen der Verbindung veranlassen die Erhebung und/oder die Vertiefung den Benutzer dazu, das Steckteil seitwärts aus dem Aufnahmeteil heraus zu schieben.

Vorzugsweise weist die Sicherung, insbesondere als eine separate Rastverbindung für die rein formschlüssige Verbindung, mindestens ein elastisch und/oder federnd gelagertes erstes Rastelement auf, das zum Herstellen der Sicherung mit einem korrespondierend zu dem ersten Rastelement ausgebildeten, insbesondere starren, zweiten Rastelement zusammenwirkt. Die Herstellung und Bereitstellung solcher Rastelemente ist kostengünstig realisierbar und ermöglicht eine zu der formschlüssigen Verbindung zusätzliche Verbindung, insbesondere zum Verhindern eines ungewollten Trennens der formschlüssigen Verbindung. Vorzugsweise ist das erste Rastelement dem Steckteil und das zweite Rastelement dem Aufnahmeteil zugeordnet.

Gemäß einer Weiterbildung sind die Sicherung und/oder die formschlüssige Verbindung durch ein mindestens teilweises Ineinanderschieben bzw. Ineinanderstecken des Steckteils in das Aufnahmeteil in einer Richtung quer zur Längsausrichtung des Steckverschlusses und/oder quer zu einer Zugrichtung einer bei der vorgesehenen Benutzung auf den Steckverschluss wirkenden Zugkraft herstellbar. Insbesondere hat die Einsteckbewegung des Steckteils in das Aufnahmeteil eine rechtwinklig zur Längsausrichtung des Steckverschlusses und/oder zu einer Zugrichtung einer bei der vorgesehenen Benutzung auf den Steckverschluss wirkenden Zugkraft gerichtete Komponente. Somit erfolgt zum Herstellen und/oder Trennen der Verbindung des Steckteils mit dem Aufnahmeteil gerade keine Bewegung im Wesentlichen in Richtung der Längsausrichtung des Steckverschlusses bzw. in Zugrichtung bei einer Zugbelastung des Steckverschlusses. Hierdurch ist eine formschlüssige Verbindung realisierbar, die bei einer Zugbelastung des Steckverschlusses eine sichere Befestigung des Steckteils an dem Aufnahmeteil gewährleistet.

Nach einer weiteren Ausführungsform ist innerhalb des Steckteils, insbesondere in einem dem Aufnahmeteil zugewandten Bereich, ein Befestigungselement zum Befestigen eines Endes eines Strangelementes vorgesehen. Das Befestigungselement kann als ein starrer Stift, eine starre Achse oder ein starrer Achsabschnitt ausgebildet sein, um den das Strangelement herum führbar ist. Vorzugsweise ist das Befestigungselement in einer dem ersten Formschlusselement zugeordneten Befestigungsaufnahme befestigbar, insbesondere einrastbar, ist. Das Befestigungselement kann aus der Befestigungsaufnahme lösbar sein. Alternativ kann das Befestigungselement ein Teil und/oder eine Verlängerung des ersten Formschlusselementes sein. Vorzugsweise ist das Befestigungselement derart innerhalb des Steckteils angeordnet, dass das Ende des Strangelementes, insbesondere ein vernähter Bereich des Endes, innerhalb des Steckteils angeordnet ist und/oder von dem Steckteil verdeckt ist.

Vorzugsweise hat das Steckteil und/oder der Betätigungsmechanismus mindestens ein elastisch gelagertes Betätigungselement, insbesondere eine Druckfläche. Das Betätigungselement kann zum Lösen der Sicherung dienen. Insbesondere ist mittels des Betätigungselementes das erste Rastelement aus einer Wirkposition, in der das erste Rastelement mit dem zweiten Rastelement zusammenwirkt, heraus bewegbar. Vorzugsweise ist das Betätigungselement mit dem ersten Rastelement zum Lösen der Sicherung und/oder der Rastverbindung des ersten Rastelementes mit dem zweiten Rastelement verbunden. Somit ist das erste Rastelement aufgrund der, insbesondere einstückigen, Verbindung mit dem Betätigungselement elastisch gelagert. Vorzugsweise beträgt die zum Trennen der Verbindung des Steckteils von dem Aufnahmeteil mittels einer Betätigung des Betätigungselementes benötigte Kraft maximal 50 Newton, insbesondere maximal 30 Newton.

Gemäß einer Weiterbildung hat das Steckteil eine Anlagefläche, die bei einer Verbindung des Steckteils mit dem Aufnahmeteil an einem Anlagesteg des Aufnahmeteils anschlägt. Vorzugsweise ist die Anlagefläche und/oder der Anlagesteg der Seite mit dem Durchbruch für das teilweise Durchstecken des ersten Formschlusselementes und/oder der Erhebung zugeordnet. Vorzugsweise ist aufgrund des Anlagestegs die Einschubrichtung des Steckteils in das Aufnahmeteil vorgegeben.

Nach einer weiteren Ausführungsform ist dem ersten Rastelement und/oder dem zweiten Rastelement eine Rampe zum Führen des ersten Rastelementes in eine Position zum Herstellen der Sicherung, insbesondere als eine Rastverbindung, zugeordnet. Hierdurch ist das Herstellen der Verbindung des Steckteils mit dem Aufnahmeteil vereinfacht. Insbesondere ist das Betätigen eines Betätigungsmechanismus und/oder eines Betätigungselementes lediglich zum Trennen des Steckteils von dem Aufnahmeteil notwendig. Vorzugsweise springt das erste Rastelement beim Einstecken des Steckteils in das Aufnahmeteil für den Benutzer spürbar und/oder hörbar in seine Rastposition. Hierdurch erhält der Benutzer eine eindeutige Rückmeldung, ob die gewünschte Verbindung und/oder Sicherung hergestellt ist.

Von besonderem Vorteil ist eine Tierhalteleine mit einem erfindungsgemäßen Steckverschluss mit einer Leine, wobei ein erstes Ende der Leine einer Halteeinrichtung zum Halten der Leine und ein von dem ersten Ende abgewandtes zweites Ende der Leine dem Steckteil zugeordnet ist. Derartige Tierhalteleinen können zum Halten und/oder Führen von Hunden oder Katzen ausgebildet sein. Die Halteeinrichtung kann als eine einfache Halteschlaufe oder als eine Griffeinrichtung, insbesondere zum Aufrollen und Abrollen der Leine, ausgebildet sein. Hierbei ist die Leine als ein erstes, vorzugsweise flexibles, Strangelement vorgesehen. Die Leine und/oder das flexible Strangelement kann als ein Gurt, ein Band, eine Kette und/oder ein Seil ausgebildet sein. Vorzugsweise ist dem Aufnahmeteil an einem von dem Steckteil abgewandten Ende ein zweites Strangelement oder ein Anbauteil zugeordnet. Das zweite Strangelement kann als ein Beißgurt und/oder eine Halsbandschlaufe für ein Tier ausgebildet sein.

Gemäß einer alternativen, auch eigenständig und unabhängig von der vorliegenden Erfindung denkbaren Ausführungsform ist eine Tierhalteleine oder eine Leine mit einem Beißgurt vorgesehen, wobei der Beißgurt mittels einer Schnellkupplung mit der Tierhalteleine oder Leine verbindbar ist. Hierbei ist von Vorteil, dass der Beißgurt auf einfache und schnelle Art mit der Leine verbindbar, von der Leine ablösbar und/oder austauschbar ist. Insbesondere ist ein erstes Ende des Beißgurtes mit der Leine mittels der Schnellkupplung verbindbar und ein von dem ersten Ende abgewandtes zweites Ende des Beißgurtes ist zum Verbinden der Leine und/oder des Beißgurtes mit einer Halsbandschlaufe für ein Tier vorgesehen. Vorzugsweise hat das zweite Ende eine zweite Schnellkupplung. Vorzugsweise ist die Schnellkupplung zum Verbinden des Beißgurtes mit der Tierhalteleine oder Leine gemäß dem erfindungsgemäßen Steckverschluss ausgebildet.

Aufgrund des erfindungsgemäßen Steckverschlusses ist eine zuverlässige und sichere Verbindung des Steckteils mit dem Aufnahmeteil auch bei hohen Zugkräften, insbesondere beim Halten und/oder Führen von Hunden, gewährleistbar. Gleichzeitig ergibt sich eine einfache Bedienbarkeit, wodurch insbesondere ein Auswechseln eines Beißgurtes oder eines anderen Anbauteils erleichtert ist. Zudem ist das Ende des ersten Strangelementes innerhalb des Steckteils angeordnet. Hierdurch ist beispielsweise eine Naht einfach verdeckbar, die beim Umlegen und Vernähen des Endes zum Herstellen einer Schlaufe zum Befestigen des ersten Strangelementes entsteht. Zusätzliche Nahtabdeckungen sind somit unnötig. Darüber hinaus lassen sich insbesondere aufgrund der Anordnung des Befestigungselementes innerhalb des Steckteils und/oder des Steckverschlusses kompakte Bauformen realisieren. Insbesondere wirken über das Befestigungselement im Wesentlichen Druckkräfte auf die Formschlusselemente. Dies ist beispielsweise für die Haltbarkeit eines Steckverschlusses aus einem Kunststoff besonders vorteilhaft.

Vorzugsweise ist das Steckteil und/oder das Aufnahmeteil einstückig, insbesondere als ein Kunststoffspritzgussteil, herstellbar. Eine Herstellung aus Kunststoff, insbesondere als Kunststoffspritzgussteil, ermöglicht eine kostengünstige Herstellung. Das Gewicht des Steckverschlusses kann weniger als 15 Gramm, insbesondere maximal 10 Gramm, besonders bevorzugt maximal 6 Gramm, betragen. Vorzugsweise liegt die maximale Breite des Steckverschlusses in einem Bereich von 26 mm bis 28 mm, insbesondere bei einem dem Aufnahmeteil zugeordneten zweiten Strangelement mit einer Breite von 20 mm. Gemäß einer weiteren Ausführungsform liegt die maximale Breite des Steckverschlusses in einem Bereich von 18 mm bis 20 mm, insbesondere bei einem dem Aufnahmeteil zugeordneten zweiten Strangelement mit einer Breite von 14 mm.

Nachfolgend wir die Erfindung anhand der Figuren näher erläutert. Es zeigen:
- Fig. 1: eine Frontansicht eines erfindungsgemäßen Steckverschlusses,
- Fig. 2: eine perspektivische Darstellung des erfindungsgemäßen Steckverschlusses,
- Fig. 3: eine Seitenansicht des erfindungsgemäßen Steckverschlusses,
- Fig. 4: eine geschnittene Seitenansicht des erfindungsgemäßen Steckverschlusses gemäß Fig. 3,
- Fig. 5: eine Draufsicht auf ein Steckteil für den erfindungsgemäßen Steckverschluss,
- Fig. 6: eine Frontansicht des Steckteils für den erfindungsgemäßen Steckverschluss,
- Fig. 7: eine Seitenansicht des Steckteils,
- Fig. 8: eine Frontansicht eines Aufnahmeteils für den erfindungsgemäßen Steckverschluss,
- Fig. 9: eine erste perspektivische Darstellung des erfindungsgemäßen Steckverschlusses vor dem Herstellen der Verbindung,
- Fig. 10: eine weitere perspektivische Darstellung des erfindungsgemäßen Steckverschlusses vor dem Herstellen der Verbindung, und
- Fig. 11 a, b: geschnittene Frontansichten des erfindungsgemäßen Steckverschlusses.

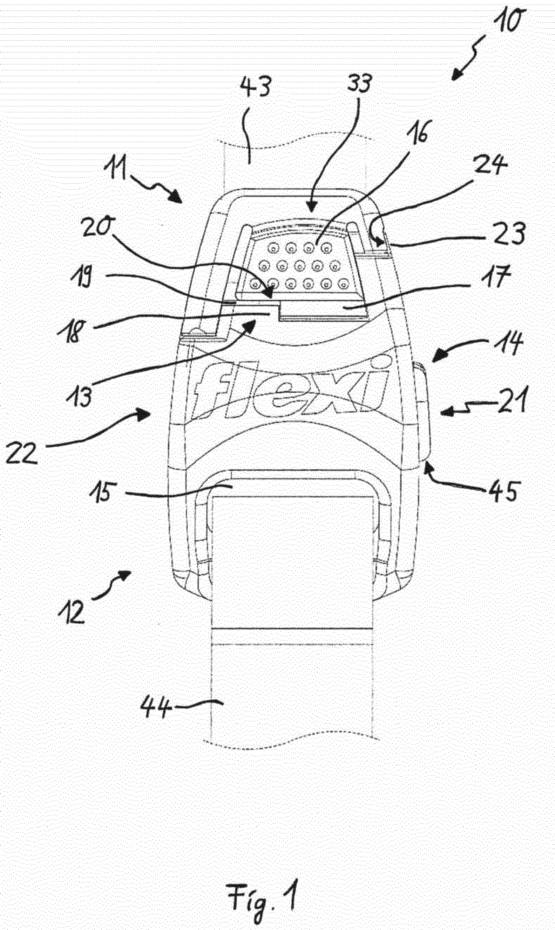

Fig. 1 zeigt eine Frontansicht eines erfindungsgemäßen Steckverschlusses 10. Der Steckverschluss 10 umfasst ein Steckteil 11 und ein Aufnahmeteil 12. Wie nachfolgend noch näher erläutert wird, sind das Steckteil 11 und das Aufnahmeteil 12 lösbar mittels einer formschlüssigen Verbindung 14 und einer zu der formschlüssigen Verbindung 14 separaten Sicherung 13 miteinander verbunden. Bei diesem Ausführungsbeispiel ist die Sicherung 13 als eine separate Rastverbindung 13 ausgebildet, die räumlich von der formschlüssigen Verbindung 14 beabstandet bzw. getrennt ist. Bei diesem Ausführungsbeispiel sind die Rastverbindung 13 und die formschlüssige Verbindung 14 in Längsrichtung des Steckverschlusses 10 voneinander beabstandet angeordnet.

Das Steckteil 11 ist zum Verbinden mit einem ersten Strangelement 43 vorgesehen. Bei diesem Ausführungsbeispiel ist das erste Strangelement 43 flexibel, nämlich als eine Leine, beispielsweise ein Seil oder ein Gurt, zum Halten eines Tieres ausgebildet. Das Aufnahmeteil 12 weist an seinem von dem Steckteil 11 abgewandten Ende eine Öffnung oder Öse 15 auf. Die Öse 15 ist zum Befestigen eines zweiten Strangelementes 44 oder eines anderen Anbauteils vorgesehen. Hier ist das zweite Strangelement 44 ebenfalls flexibel und als ein Beißgurt oder eine Halsbandschlaufe für ein Tier ausgebildet.

Bei der Benutzung des Steckverschlusses 10 mit daran angeordneten ersten und zweiten Strangelementen 43, 44 wirkt auf den Steckverschluss 10 eine Zugkraft mindestens teilweise in Richtung der Längsausrichtung des Steckverschlusses 10 bzw. von dem Steckteil 11 in Richtung des Aufnahmeteils 12 und/oder von dem Aufnahmeteil 12 in Richtung des Steckteils 11.

Die Rastverbindung 13 umfasst einen Betätigungsmechanismus 33. Erst aufgrund einer manuellen Betätigung des Betätigungsmechanismus 33 lässt sich die Rastverbindung 13 und damit auch die formschlüssige Verbindung 14 trennen. Der Betätigungsmechanismus 33 umfasst bei diesem Ausführungsbeispiel ein Betätigungselement 16. Das Betätigungselement 16 ist dem Steckteil 11 zugeordnet und ist bei diesem Ausführungsbeispiel als eine elastisch gelagerte Drucktaste ausgebildet ist. Zum Lösen der Rastverbindung 13 ist das Betätigungselement 16 mindestens teilweise in das Steckteil 11 hinein drückbar. Dem Betätigungselement 16 ist ein erstes Rastelement 17 zugeordnet, das zusammen mit dem Betätigungselement 16 in das Steckteil 11 hinein drückbar ist. Das erste Rastelement 17 ist dem Aufnahmeteil 12 zugewandt. Des Weiteren wirkt das erste Rastelement 17 mit einem dem Aufnahmeteil 12 zugeordneten und bei diesem Ausführungsbeispiel starr ausgebildeten zweiten Rastelement 18 zusammen. In der Rastverbindung 13 greift das in Richtung des Steckteils 11 vorsprungartig ausgebildete zweite Rastelement 18 in eine mittels des ersten Rastelementes 17, einer Kante des Betätigungselementes 16 und einer Innenseite eines Stegs 19 gebildete Ausnehmung 20 ein. Hierbei ist der Steg 19 dem Steckteil 11 zugeordnet und die Innenseite des Stegs 19 einem Ende des ersten Rastelementes 17 zugewandt. Aufgrund der Rastverbindung 13 ist ein unbeabsichtigtes Lösen der Verbindung, insbesondere der formschlüssigen Verbindung 14, zwischen dem Steckteil 11 und dem Aufnahmeteil 12 verhindert.

Das Steckteil 11 weist ein erstes Formschlusselement 21 auf. Bei dem hier gezeigten Ausführungsbeispiel ist das erste Formschlusselement 21 als ein starres Achselement 21 ausgebildet. Das erste Formschlusselement 21 wirkt mit einem in dieser Figur nicht näher erkennbaren zweiten Formschlusselement 22 zusammen, das dem Aufnahmeteil 12 zugeordnet ist. Das zweite Formschlusselement 22 ist bei diesem Ausführungsbeispiel als eine zu dem Querschnitt des Achselementes korrespondierend ausgebildete Achselementaufnahme 22 ausgebildet. Hierbei ist die Achselementaufnahme 22 kanalartig ausgebildet und erstreckt sich von einer ersten Seitenwand des Aufnahmeteils 12 zu einer von der ersten Seitenwand abgewandten zweiten Seitenwand des Aufnahmeteils 12. Hierbei haben die Seitenwände zu der Achselementaufnahme 22 bzw. dem Achselement 21 korrespondierend ausgebildete Durchbrüche. In der hergestellten Verbindung des Steckteils 11 mit dem Aufnahmeteil 12 steht das erste Formschlusselement 21 ein Stück weit, bei diesem Ausführungsbeispiel etwa 1 mm, über die Seitenwand, die einem Anlagesteg 23 des Aufnahmeteils 12 zugeordnet ist, durch den Durchbruch des zweiten Formschlusselementes 22 nach außen zum Ausbilden einer Erhebung 45 hinaus.

Der Anlagesteg 23 des Aufnahmeteils 12 erstreckt sich von der Öse 15 weg und/oder in Richtung des Steckteils 11. Der Anlagesteg 23 ist der Seite des Aufnahmeteils 12 mit der Erhebung 45 zugeordnet. Hierbei ist das zweite Formschlusselement 22 etwa mittig zwischen dem Anlagesteg 23 und der Öse 15 und quer, hier rechtwinklig, zur Längsausrichtung des Steckverschlusses 10 angeordnet. In der Verbindung des Steckteils 11 mit dem Aufnahmeteil 12 liegt eine dem Steckteil 11 zugewandte Innenfläche des Anlagestegs 23 an einer nach außen gerichteten Anlagefläche 24 des Steckteils 11 an.

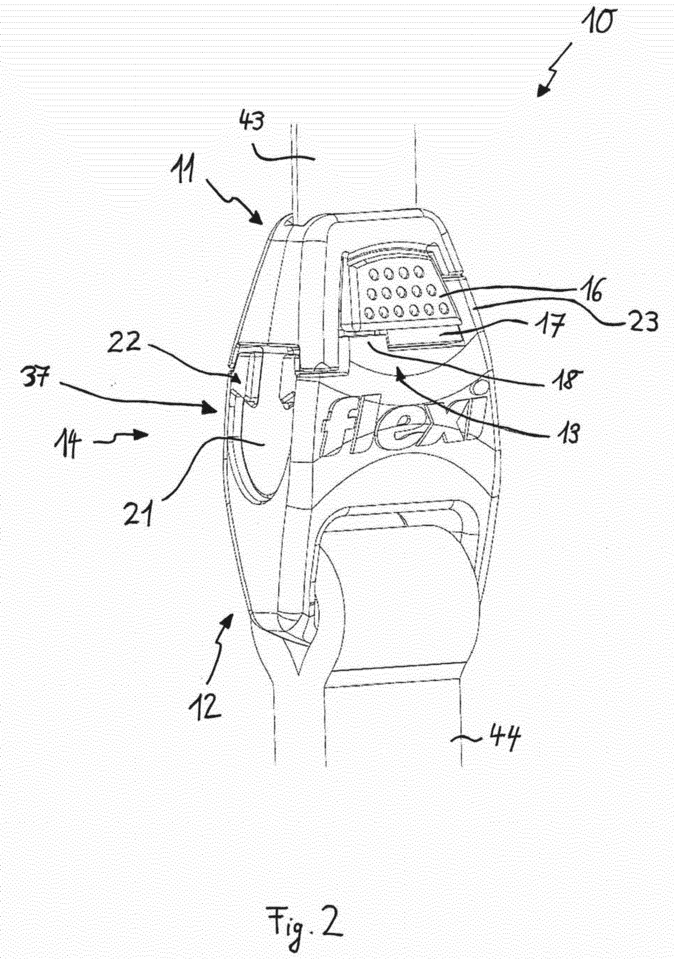

Fig. 2 ist eine perspektivische Darstellung des erfindungsgemäßen Steckverschlusses 10 zu entnehmen. Hierbei ist die von dem Anlagesteg 23 abgewandte Seite des Steckverschlusses 10 gezeigt. Das erste Formschlusselement 21 ist formschlüssig und von der vom Anlagesteg 23 abgewandten Seite in Richtung der Seite des Aufnahmeteils 12 mit dem Anlagesteg 23 in das zweite Formschlusselement 22 hineingeschoben.

An der von dem Anlagesteg 23 abgewandten Seite weist der Steckverschluss 10 eine Vertiefung 37 auf. Die Vertiefung 37 entsteht bei einer hergestellten Verbindung des Steckteils 11 mit dem Aufnahmeteil 12 aufgrund eines in das Innere des Aufnahmeteils 12 bzw. des zweiten Formschlusselementes 22 hinein gerückten Endes des ersten Formschlusselementes 21. Ein erstes Ende des hier als Achselement 21 ausgebildeten ersten Formschlusselementes 21 ist bei der hergestellten Verbindung als die hier nicht erkennbare Erhebung 45 ausgebildet. Ein von dem ersten Ende abgewandtes zweites Ende des Achselementes 21 bildet die Vertiefung 37. Im Bereich der Vertiefung 37 steht das Aufnahmeteil 12 nach außen über die Vertiefung 37 hinaus. Hierdurch ist die Außenseite der Vertiefung 37 bzw. das zweite Ende des ersten Formschlusselementes 21 bei dem Steckverschluss 10 in Bezug zu dem Aufnahmeteil 12 nach innen versetzt.

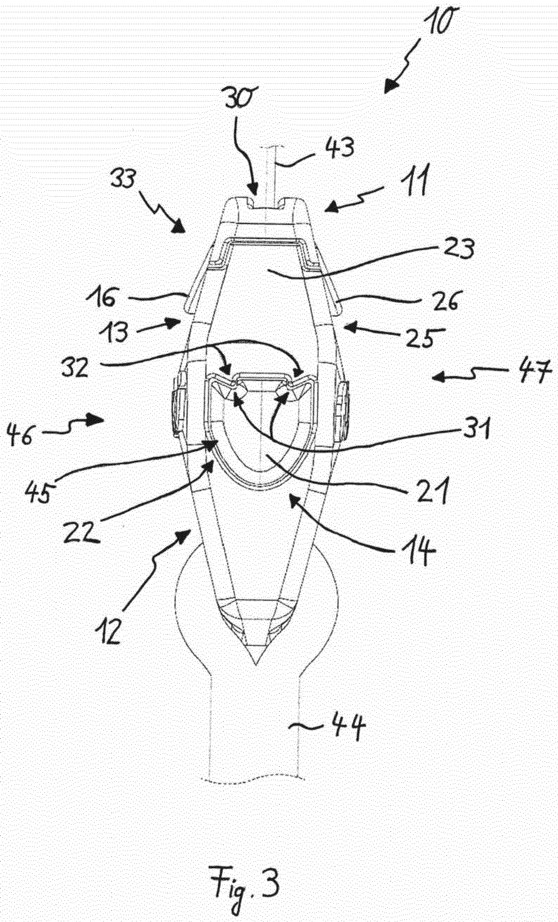

Fig. 3 zeigt eine Seitenansicht des erfindungsgemäßen Steckverschlusses 10. Hierbei ist die Seite bzw. die Seitenwand mit dem Anlagesteg 23 gezeigt. Dieser Darstellung ist zu entnehmen, dass das Steckteil 11 an einer von dem Aufnahmeteil 12 abgewandten Seite eine Öffnung 30 hat. Die Öffnung 30 ist zum Einführen des ersten Strangelementes 43 in das Steckteil 11 vorgesehen.

Der Steckverschluss 10 weist eine erste Front 46 auf, die gemäß Fig. 1 näher dargestellt ist. Der Darstellung gemäß Fig. 3 ist nun zu entnehmen, dass der Steckverschluss 10 eine von der ersten Front 46 abgewandte zweite Front 47 aufweist. Die erste Front 46 und die zweite Front 47 des Steckverschlusses 10 sind bei diesem Ausführungsbeispiel spiegelsymmetrisch ausgebildet. Insoweit wird auch auf die vorangegangene Beschreibung verwiesen. Aufgrund der spiegelsymmetrischen Ausbildung weist die zweite Front 47 eine weitere lösbare Sicherung 25 auf, die bei diesem Ausführungsbeispiel als eine Rastverbindung 25 ausgebildet ist und die in Aufbau und Funktion der Rastverbindung 13 entspricht.

Somit umfasst der Betätigungsmechanismus 33 bei diesem Ausführungsbeispiel ein weiteres Betätigungselement 26, das dem Steckteil 11 zugeordnet ist und bei diesem Ausführungsbeispiel als eine elastisch gelagerte Drucktaste ausgebildet ist. Zum Lösen der Rastverbindung 25 ist das Betätigungselement 26 mindestens teilweise in das Steckteil 11 hinein drückbar.

Die Betätigungselemente 16, 26 erheben sich bei diesem Ausführungsbeispiel mindestens teilweise über die Außenfläche des Steckteils 11 und/oder des Aufnahmeteils 12.

Die Formschlussteile 21, 22 haben eine unter Zugbelastung, nämlich bei einer Zugkraft auf das erste Strangelement 43 und das zweite Strangelement 44 mindestens teilweise in Richtung der Längsausrichtung des Steckverschlusses 10 bzw. von dem Steckteil 11 in Richtung des Aufnahmeteils 12 und/oder von dem Aufnahmeteil 12 in Richtung des Steckteils 11, selbstzentrierende und/oder selbstsichernde Gestalt. Hierzu weist das erste Formschlussteil 21 bei diesem Ausführungsbeispiel im Querschnitt eine im Wesentlichen U-förmige Außenkontur auf. Das erste Formschlusselement 21 hat an einer der Öffnung 30 zugewandten Seite zwei Einkerbungen 31. In die Einkerbungen 31 greifen in der formschlüssigen Verbindung 14 zwei korrespondierend ausgebildete Vorsprünge 32 des zweiten Formschlusselementes 22 ein. Die Kontur des zweiten Formschlusselementes 22 korrespondiert zu der Außenkontur des ersten Formschlusselementes 21.

Bei einer Zugkraft mit mindestens einer Komponente in Richtung der Längsausrichtung des Steckverschlusses 10 bzw. von dem Steckteil 11 in Richtung des Aufnahmeteils 12 und/oder von dem Aufnahmeteil 12 in Richtung des Steckteils 11 zentriert sich das erste Formschlusselement 21 automatisch und selbsttätig aufgrund des Zusammenwirkens der Einkerbungen 31 mit den Vorsprüngen 32 in Bezug zu dem zweiten Formschlusselement 22. Des Weiteren rutschen die Vorsprünge 32 bei einer Zugbelastung mindestens teilweise über die Einkerbungen 31 bzw. die Einkerbungen 31 hintergreifen mindestens teilweise die Vorsprünge 32, wodurch die formschlüssige Verbindung 14 zusätzlich gesichert ist.

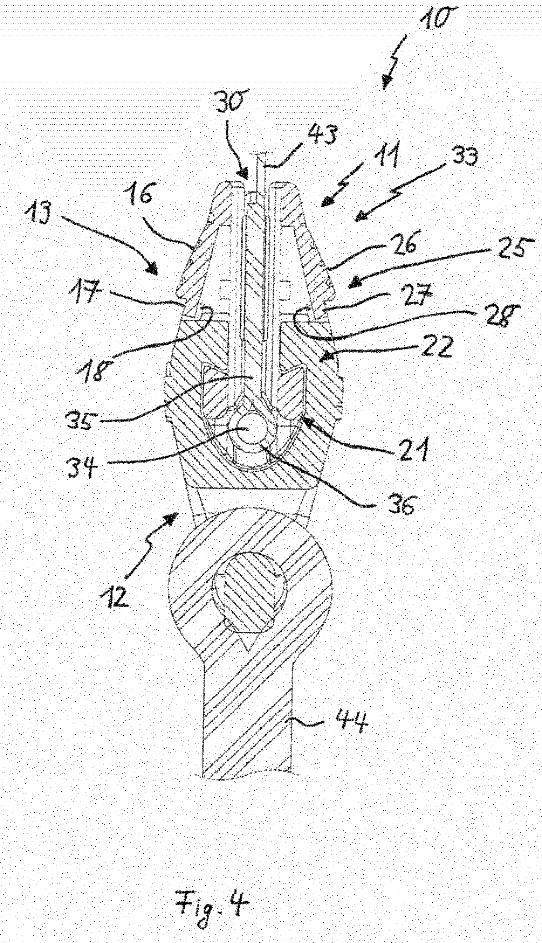

Fig. 4 ist eine geschnittene Seitenansicht des erfindungsgemäßen Steckverschlusses gemäß Fig. 3 zu entnehmen. Dem Betätigungselement 26 ist ein erstes Rastelement 27 zugeordnet, das zusammen mit dem Betätigungselement 26 in das Steckteil 11 hinein drückbar ist. Das erste Rastelement 27 ist dem Aufnahmeteil 12 zugewandt. Des Weiteren wirkt das erste Rastelement 27 mit einem dem Aufnahmeteil 12 zugeordneten und bei diesem Ausführungsbeispiel starr ausgebildeten zweiten Rastelement 28 zusammen. In der Rastverbindung 13 greift das vorsprungartig ausgebildete zweite Rastelement 28 in eine mittels des ersten Rastelementes 27, einer Kante des Betätigungselementes 26 und eines Stegs 19 gebildete Ausnehmung 29 ein. Hierbei ist der Steg 19 dem Steckteil 11 zugeordnet und einem Ende des ersten Rastelementes 27 mindestens teilweise zugewandt. Aufgrund der Rastverbindung 25 ist ein unbeabsichtigtes Lösen der Verbindung zwischen dem Steckteil 11 und dem Aufnahmeteil 12 verhindert. Somit entsprechen Aufbau und Funktion des ersten Rastelementes 27 und des zweiten Rastelementes 28 der Rastverbindung 25, dem des ersten Rastelementes 17 und des zweiten Rastelementes 18 der Rastverbindung 13.

Des Weiteren ist der Fig. 4 zu entnehmen, dass das erste Formschlusselement 21 ein Befestigungselement 34 zum Befestigen eines Endes 35 des Strangelementes 43 umfasst. Bei diesem Ausführungsbeispiel ist das Befestigungselement 34 als ein starrer Stift 34 ausgebildet, der formschlüssig mit dem ersten Formschlusselement 21 verbunden ist und sich quer, hier im Wesentlichen rechtwinklig, zur Längsausrichtung des Steckverschlusses 10 erstreckt. Um den Stift 34 ist das Ende 35 des ersten Strangelementes 43 zum Befestigen des ersten Strangelementes 43 an dem Steckteil 11 geführt. Bei diesem Ausführungsbeispiel bildet das Strangelement 43 eine das Befestigungselement 34 umlaufende Schlaufe 36. Der Stift 34 ist innerhalb des ersten Formschlusselementes 21 aufgenommen und befestigt. Hierbei ist der Stift 34 hinsichtlich seiner Längsachse quer, bei diesem Ausführungsbeispiel rechtwinklig zur Längsausrichtung des Steckverschlusses 10 und parallel zur Längsausrichtung des ersten Formschlusselementes 21 ausgerichtet. Somit ist die Befestigung des ersten Strangelementes 43 in den Steckverschluss 10, bei diesem Ausführungsbeispiel etwa mittig in den Steckverschluss 10, hinein verlagert. Hierdurch wirken bei einer Zugkraft auf das erste Strangelement 43 auf das erste Formschlusselement 21 im Wesentlichen Druckkräfte, die auf das zweite Formschlusselement 22 und letztlich in das zweite Strangelement 44 geleitet werden. Zudem ermöglicht die Verlagerung der Befestigung des ersten Strangelementes 43 bzw. des Stiftes 34 in den Bereich des Zentrums des Steckverschlusses 10 eine kompaktere Bauform und/oder eine einfach zu realisierende Verdeckung der Naht, die beim Umlegen des ersten Strangelementes 43 um den Stift 34 und dem Vernähen des umgelegten Endes des ersten Strangelementes 43 zum Erzeugen der Schlaufe 36 entsteht.

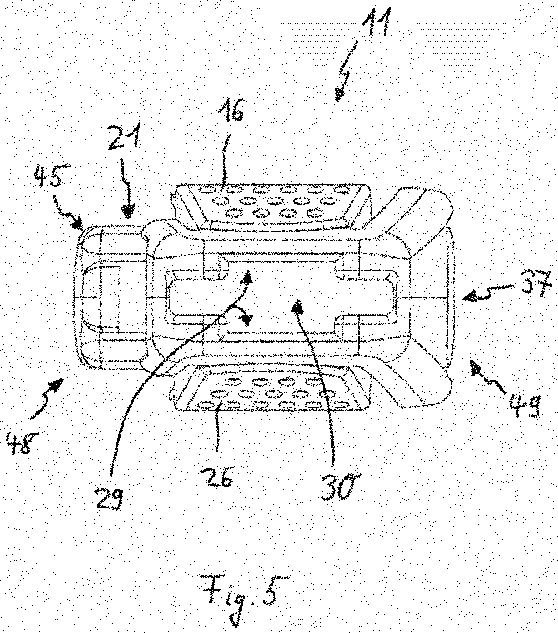

Fig. 5 zeigt eine Draufsicht auf ein Steckteil 11 für den erfindungsgemäßen Steckverschluss 10. An einer von einem ersten Ende 48 des ersten Formschlusselementes 21 mit der Erhebung 45 abgewandten Seite des Steckteils 11 weist das erste Formschlusselement 21 die Vertiefung 37 auf. Das erste Ende 48 des ersten Formschlusselementes 21 ragt somit über eine Seite des Steckteils 11 hinaus, während das von dem ersten Ende 48 abgewandt angeordnete zweite Ende 49 des ersten Strangelementes 21 zum Ausbilden der Vertiefung 37 in eine Seite des Steckteils 11 hinein gerückt ist.

Die Öffnung 30 weist in einem mittigen Bereich eine Erweiterung 29 auf. Aufgrund der Erweiterung 29 hat die Öffnung 30 in dem mittigen Bereich eine größere Tiefe als im Bereich der beiden voneinander abgewandten Enden der Öffnung 30. Hierdurch kann wahlweise entweder ein gurtartiges Strangelement 43 oder ein seilartiges Strangelement 43 durch die Öffnung 30 geführt werden. Bei einem gurtartigen Strangelement 43 entspricht die Breite des Gurtes etwa der maximalen Breite der Öffnung 30. Bei einem seilartigen Strangelement 43 entspricht der Durchmesser des Seils etwa der Tiefe und/oder Breite der Öffnung 30 im Bereich der Erweiterung 29.

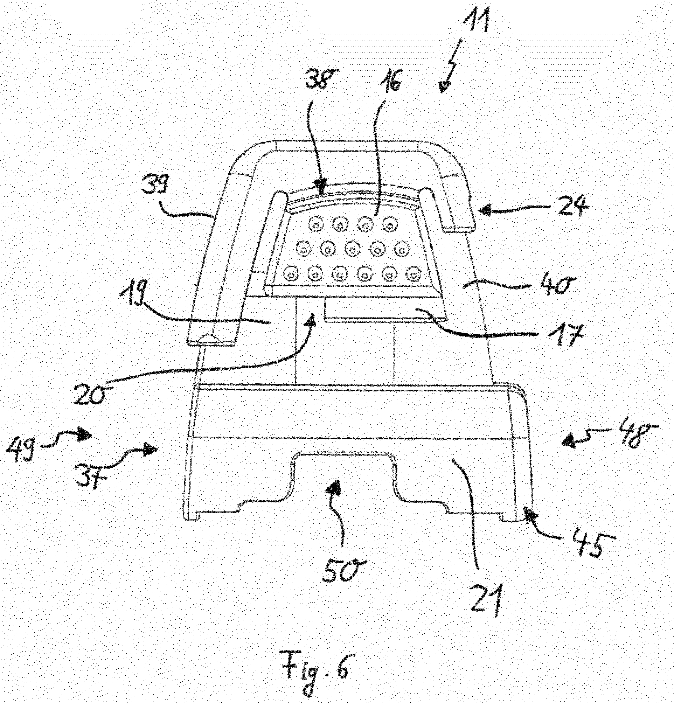

Fig. 6 ist eine Frontansicht eines Steckteils 11 für den erfindungsgemäßen Steckverschluss 10 zu entnehmen. Die Blickrichtung entspricht der Perspektive gemäß Fig. 1. Das Betätigungselement 16 weist ebenso wie das hier nicht näher dargestellte Betätigungselement 26 an einer von dem ersten Rastelement 17, 27 abgewandten Seite eine elastische Drehverbindung 38 auf. Aufgrund der elastischen Drehverbindung 38, mittels derer das Betätigungselement 16, 26 mit dem Steckteil 11 verbunden ist, ist das Betätigungselement 16, 26 und das damit verbundene erste Rastelement 17, 27 in das Steckteil 11 hinein drückbar. Sobald das Betätigungselement 16, 26 losgelassen wird bewegt sich das Betätigungselement 16, 26 und das erste Rastelement 17, 27 selbsttätig in seine Ausgangsposition zurück.

An einer von der Drehverbindung 38 abgewandten und dem ersten Formschlusselement 21 zugewandten Seite ist das erste Rastelement 17, 27 mit dem Betätigungselement 16, 26 verbunden. Das erste Rastelement 17, 27 ist stegartig ausgebildet und erstreckt sich bei diesem Ausführungsbeispiel parallel zur Längsausrichtung des ersten Formschlusselementes 21 bzw. quer, hier rechtwinklig, zur Längsausrichtung des Steckverschlusses 10. Ein von einem Steg 40 abgewandtes Ende des ersten Rastelementes 17, 27 bildet zusammen mit einem diesem Ende zugewandten und von diesem Ende beabstandeten Steg 19 die Aussparung 20.

Weiter ist zu erkennen, dass die Anlagefläche 24 bei diesem Ausführungsbeispiel als eine Einsenkung ausgebildet ist. Darüber hinaus ist das zweite Ende 49 des ersten Formschlusselementes 21 bzw. die Außenseite der Vertiefung 37 in Bezug auf eine zu dem Betätigungselement 16, 26 und der Vertiefung 37 benachbarte Kante 39 nach innen zurück versetzt. Die Kante 39 umgreift weitgehend die Außenseite des Stegs 19.

Auf der von der Kante 39 abgewandten und dem ersten Formschlusselement 21 zugewandten Seite ist der weitere Steg 40 angeordnet. Der weitere Steg 40 ist weitgehend spiegelsymmetrisch zu dem Steg 19 aufgebaut. An den von dem ersten Formschlusselement 21 abgewandten Enden der Stege 19, 40 ist das Betätigungselement 16, 26 befestigt. Der Steg 40 stellt an seiner Außenseite die Anlagefläche 24 bereit. Die Außenseite des Stegs 40 liegt weitgehend frei. Somit ist eine zu dem Steg 19 vergleichbare Kante 39 bei dem Steg 40 gerade nicht vorgesehen.

Weiter ist erkennbar, dass das erste Formschlusselement 21 in einem von den Betätigungselementen 16 abgewandten und in der hier nicht dargestellten Verbindung mit dem Aufnahmeteil 12 dem Aufnahmeteil 12 zugewandten Bereich eine Befestigungsaufnahme 50 aufweist. Die Befestigungsaufnahme 50 ist zum Aufnehmen und Befestigen des hier nicht näher dargestellten Befestigungselementes 43 vorgesehen.

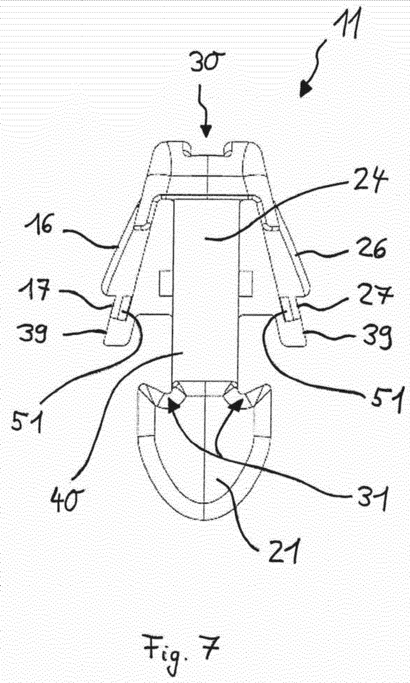

Fig. 7 zeigt eine Seitenansicht des Steckteils 11 gemäß Fig. 6. Die Blickrichtung entspricht der Perspektive gemäß Fig. 3. Gut zu erkennen ist der frei liegende weitere Steg 40 mit der nach außen gerichteten Anlagefläche 24. An den Innenseiten der ersten Rastelemente 17, 27 ist jeweils eine Rampe 51 angeordnet, die eine nach außen und zur Seite hin abfallende Neigung aufweisen.

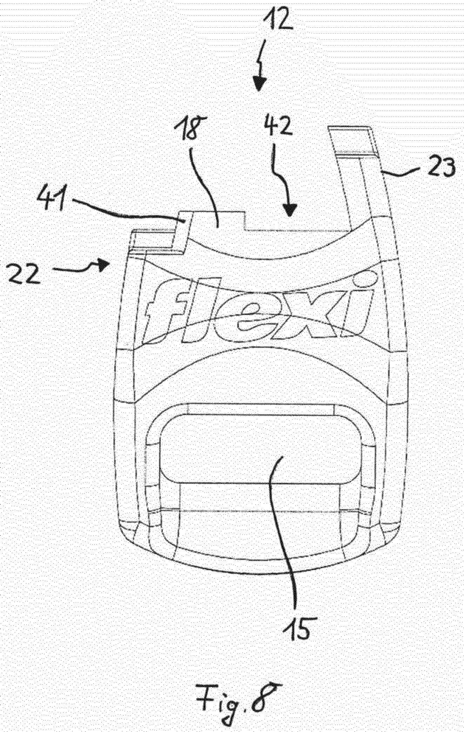

Fig. 8 ist eine Frontansicht eines Aufnahmeteils 12 für den erfindungsgemäßen Steckverschluss 10 zu entnehmen. Die Blickrichtung entspricht der Perspektive gemäß Fig. 1. Da die erste Front 46 spiegelsymmetrisch zur zweiten Front 47 ausgebildet ist, gelten die Ausführungen zu der hier dargestellten ersten Front 46 analog auch für die zweite Front 47.

Bei diesem Ausführungsbeispiel erstreckt sich ausgehend von dem zweiten Rastelement 18, 28 in eine von der Seite mit dem zweiten Formschlusselement 22 abgewandte Richtung jeweils eine Rampe 41. Die Rampe 41 erleichtert ein seitwärts gerichtetes Einschieben des Steckteils 11 quer zur Längsausrichtung des Aufnahmeteils 12 und in Richtung der Seite mit dem Anlagesteg 23. Hierzu wirkt die Rampe 41 mit der Rampe 51 des Steckteils 11 zusammen, wobei mittels der Rampen 41, 51 das erste Rastelement 17, 27 bei der quer zur Längsausrichtung des Aufnahmeteils 12 gerichteten Einsteckbewegung des Steckteils 11 aus dem Steckteil 11 heraus bewegt wird. Hierdurch wird ein Hinweggleiten des ersten Rastelementes 17, 27 über das zweite Rastelement 18, 28 erleichtert. Sobald das erste Rastelement 17, 27 vollständig über das zweite Rastelement 18, 28 hinweg geglitten ist, bewegt sich das erste Rastelement 17, 27 wieder in seine ursprüngliche Ausgangsposition zurück. Hierbei greift das erste Rastelement 17, 27 in eine jeweils korrespondierend zu dem ersten Rastelement 17, 27 ausgebildete weitere Ausnehmung 42 ein. Die Breite der weiteren Ausnehmung 42 wird durch eine dem Anlagesteg 23 zugewandten Seite des zweiten Rastelementes 18, 28 und eine dem zweiten Rastelement 18, 28 zugewandten Seite des Anlagestegs 23 definiert

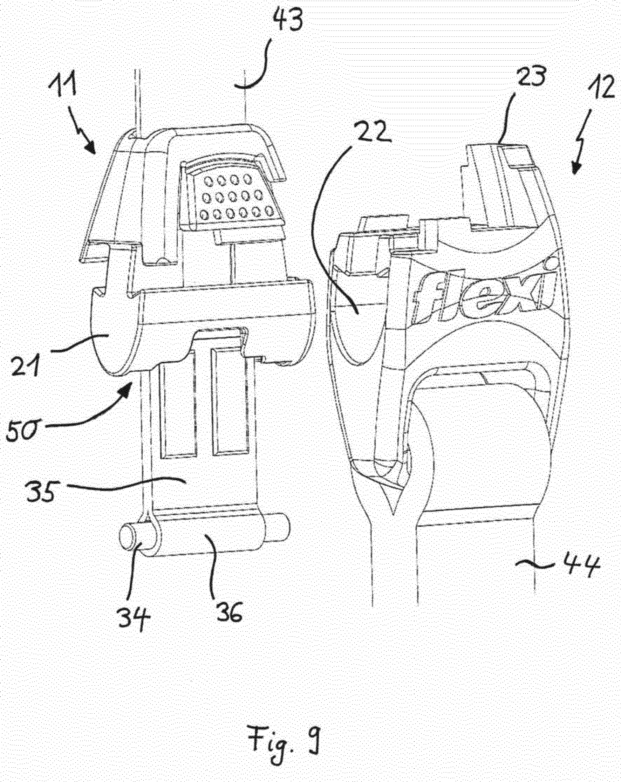

Fig. 9 zeigt eine erste perspektivische Darstellung des erfindungsgemäßen Steckverschlusses 10 vor dem Herstellen der Verbindung. Zum Verbinden des ersten Strangelementes 43 mit dem Steckteil 11 wird in das zu einer Schlaufe 36 vernähte Ende 35 des ersten Strangelementes 43 das Befestigungselement 34 eingesteckt. Sodann wird das Ende 35 mit dem Befestigungselement 34 in die Befestigungsaufnahme 50 des Steckteils 11 gesteckt. Hierbei ist das Befestigungselement 34 mittels einer Klippverbindung in der Befestigungsaufnahme 50 festsetzbar. Hierdurch ist eine sichere Verbindung des Befestigungselementes 34 und des ersten Strangelementes 43 mit dem Steckteil 11 herstellbar.

Weiter ist zu erkennen, dass der Anlagesteg 23 einen im Wesentlichen U-förmigen Querschnitt hat, wodurch der Anlagesteg 23 in der Verbindung mit dem Steckteil 11 den Steg 40 teilweise umgreift.

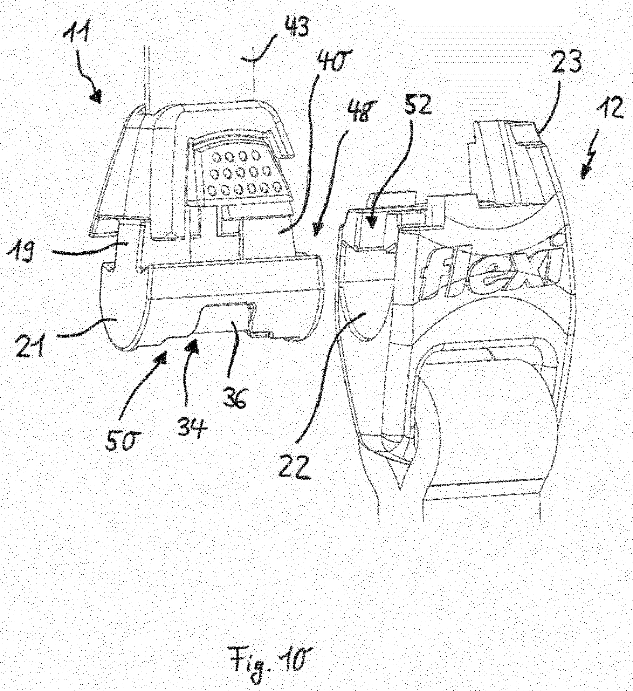

Fig. 10 ist eine weitere perspektivische Darstellung des erfindungsgemäßen Steckverschlusses 10 vor dem Herstellen der Verbindung zu entnehmen. Im Unterschied zu Fig. 9 ist hier das Befestigungselement 34 in der Befestigungsaufnahme 50 eingesetzt und befestigt.

Zum Herstellen der Verbindung des Steckteils 11 mit dem Aufnahmeteil 12 wird das Steckteil 11 seitlich neben das Aufnahmeteil 12 angeordnet, wobei sich das erste Formschlusselement 21 des Steckteils 11 auf der Höhe des zweiten Formschlusselementes 22 des Aufnahmeteils 12 befindet.

Das zweite Formschlusselement 22 weist einen Spalt 52 auf. Der Spalt 52 dient zur Aufnahme und Führung mindestens eines Teils der Stege 19, 40. Zum Herstellen der Verbindung wird das erste Ende 48 des ersten Formschlusselementes 21 in einen von dem Anlagesteg 23 abgewandten Durchbruch des zweiten Formschlusselementes 22 und in Richtung des Anlagestegs 23 eingeschoben.

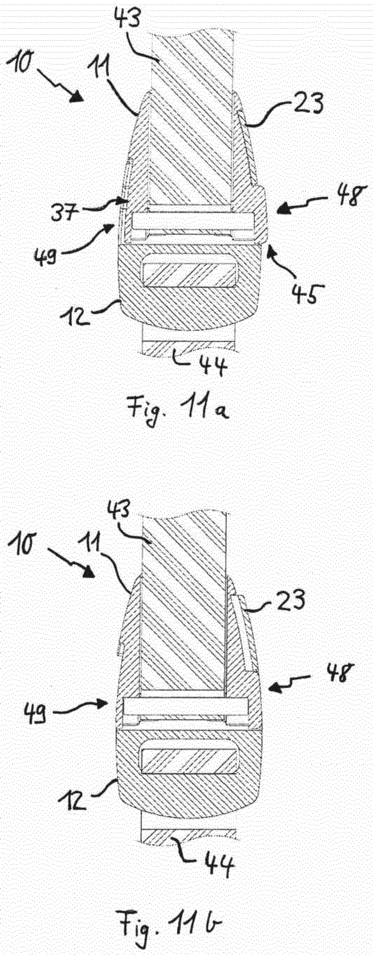

Fig. 11a zeigt eine erste geschnittene Frontansicht des erfindungsgemäßen Steckverschlusses 10. Die Verbindung des Steckteils 11 mit dem Aufnahmeteil 12 ist gemäß dieser Darstellung vollständig hergestellt. Hierbei ragt die Erhebung 45 aus der Seite des Aufnahmeteils 12 mit dem Anlagesteg 23 heraus. Bei diesem Ausführungsbeispiel ragt die Erhebung um etwa 1 mm über die Seitenfläche des Aufnahmeteils 12 heraus. Das von dem ersten Ende 48 abgewandte zweite Ende 49 des ersten Formschlusselementes 21 ist zum Ausbilden der Vertiefung 37 gegenüber der Seitenfläche des Aufnahmeteils 12 nach innen eingerückt. Bei diesem Ausführungsbeispiel ist die Vertiefung 37 etwa 1 mm tief.

Fig. 11 b zeigt eine weitere geschnittene Frontansicht des erfindungsgemäßen Steckverschlusses 10. Gemäß dieser Darstellung ist die Verbindung des Steckteils 11 mit dem Aufnahmeteil 12 unvollständig. Das erste Ende des ersten Formschlusselementes 21 schließt bündig mit der Außenseite des Aufnahmeteils 12 mit dem Anlagesteg 23 ab. Das Steckteil 11 ist gegenüber einer sicheren Verbindung gemäß Fig. 11a seitlich und von dem Anlagesteg 23 weg verschoben. Eine Innenseite des Anlagestegs 23 ist bei diesem Ausführungsbeispiel um etwa 1 mm von dem Steg 40 des Steckteils 11 beabstandet. Das zweite Ende 49 des ersten Formschlusselementes 11 schließt bündig mit der von dem Anlagesteg 23 abgewandten Seitenfläche des Aufnahmeteils 12 ab. In diesem Zustand sind die Rastverbindungen 19, 25 noch nicht vollständig hergestellt bzw. gerade wieder aufgelöst, so dass ein seitliches Auseinanderschieben des Steckteils 11 aus dem Aufnahmeteil 12 möglich ist.

Nachfolgend wird die Erfindung anhand der Figuren 1 bis 11 näher erläutert:
Ist der Steckverschluss 10 beispielsweise für eine Tierhalteleine vorgesehen, wird ein erstes Ende einer Leine 43 mit dem Befestigungselement 34 an dem Steckteil 11 befestigt. Mittels der Öse 15 wird ein hier nicht näher dargestellter Beißgurt oder eine Halsbandschlaufe für ein Tier an dem Aufnahmeteil 12 befestigt.

Zum Herstellen der lösbaren Verbindung des Steckteils 11 mit dem Aufnahmeteil 12 wird das Steckteil 11 im Bereich der von der Öse 15 abgewandten Seite des Aufnahmeteils 12 seitwärts bzw. quer zur Längsausrichtung des Aufnahmeteils 12 eingesteckt bzw. eingeschoben. Hierzu wird die Seite des Steckteils 11 mit dem Steg 40 und dem ersten Ende 48 des ersten Formschlusselementes 21 von der von dem Anlagesteg 23 abgewandten Seite des Aufnahmeteils 12 in Richtung der Seite mit dem Anlagesteg 23 bewegt. Hierbei werden die ersten Rastelemente 17, 27 automatisch aufgrund der Rampen 41, 51 nach außen gedrückt, so dass die ersten Rastelemente 17, 27 über die zweiten Rastelemente 18, 28 gleiten. In der Rastposition sind die ersten Rastelemente 17, 27 in der jeweiligen weiteren Ausnehmung 42 aufgenommen und die zweiten Rastelemente 18, 28 in der jeweiligen Ausnehmung 20, wodurch die Rastverbindungen 13, 25 realisiert sind. Das Einrasten des ersten Rastelementes 17, 27 in die Rastposition bzw. die Herstellung der Rastverbindungen 13, 25 ist für den Benutzer wahrnehmbar. Somit erhält der Benutzer bei einer korrekten Herstellung der formschlüssigen Verbindung 14 und/oder Rastverbindungen 13, 25 eine entsprechende Rückmeldung. Die Rückmeldung kann durch ein hörbares Einrasten und/oder durch eine ertastbare Positionierung realisiert sein. Eine ertastbare Rückmeldung ergibt sich auch durch eine über die Seite hinaus stehende Erhebung 45 und/oder eine Vertiefung 37.

Des Weiteren ist in der Rastposition das erste Formschlusselement 21 durch das zweite Formschlusselement 22 hindurch gesteckt, wodurch zugleich die formschlüssige Verbindung 14 realisiert ist. Aufgrund der Rastverbindungen 13, 25 ist eine unerwünschte Trennung der formschlüssigen Verbindung 14 verhindert. Hierzu sind die Rastverbindungen 13, 25 derart ausgebildet, dass diese eine ungewollte seitliche Verschiebung bzw. eine Bewegung des Steckteils 11 quer zur Längsausrichtung des Aufnahmeteils 12 bzw. des Steckverschlusses 10 und in Längsrichtung des zweiten Formschlusselementes 22 verhindern.

Bei einer Belastung des Steckverschlusses 10 aufgrund einer Zugkraft mit mindestens einer Komponente in Längsrichtung des Steckverschlusses 10 bzw. in Richtung einer von dem Steckteil 11 in Richtung des Aufnahmeteils 12 und/oder von dem Aufnahmeteil 12 in Richtung des Steckteils 11 gerichteten Zugkraft wird die auf die Leine 43 wirkende Zugkraft von dem etwa mittig in dem Steckverschluss 10 angeordneten Befestigungselement 34 aufgenommen. Hierbei wird die formschlüssige Verbindung 14 aufgrund der Selbstzentrierung mittels der Einkerbungen 31 des ersten Formschlusselementes 21 und der Vorsprünge 32 des zweiten Formschlusselementes 22 und/oder der Selbstsicherung aufgrund der die Vorsprünge 32 hintergreifenden Einkerbungen 31 noch weiter gefestigt.

Zum Lösen der Verbindung des Steckverschlusses 10 wird zunächst der Betätigungsmechanismus 33 manuell betätigt. Hierzu werden die Betätigungselemente 16, 26 gleichzeitig nach innen gedrückt, so dass das Steckteil 11 seitwärts bzw. quer zur Längsausrichtung des Aufnahmeteils 12 in Richtung von dem Anlagesteg 23 weg bewegbar ist. Hierbei sind die ersten Rastelemente 17, 27 derart nach innen eingerückt, dass diese unter die zweiten Rastelemente 18, 28 hinweg gleiten. Das Betätigen des Betätigungsmechanismus 33 bzw. das Zusammendrücken der Betätigungselemente 16, 26 erfolgt mit einer ersten Hand. Mit einer weiteren Hand sind die Erhebung 45 und die Vertiefung 37 ertastbar. Zum Lösen der formschlüssigen Verbindung 14 wird der Benutzer hierdurch intuitiv veranlasst, die Erhebung 45 seitlich in das Aufnahmeteil 12 hinein und die Vertiefung 37 seitlich aus dem Aufnahmeteil 12 heraus zu drücken. Hierdurch wird zunächst der Zustand gemäß Fig. 11 b erreicht, in dem die Rastverbindungen 13, 25 gelöst sind und ein Auseinanderschieben des Steckteils 11 aus dem Aufnahmeteil 12 ermöglicht ist. Aufgrund der räumlich von der formschlüssigen Verbindung 14 getrennten Rastverbindungen 13, 25 ist somit eine zweihändige Bedienung zum Trennen der Verbindung des Steckteils 11 von dem Aufnahmeteil 12 nötig, wodurch die Gefahr eines ungewollten Trennens erheblich reduziert ist. Hierbei ist die Bedienung einfach durchführbar gestaltet.

**Bezugszeilchenliste:**

| | | | |
|---|---|---|---|
| 10 | Steckverschluss | 48 | Erstes Ende |
| 11 | Steckteil | 49 | Zweites Ende |
| 12 | Aufnahmeteil | 50 | Befestigungsaufnahme |
| 13 | Rastverbindung | 51 | Rampe |
| 14 | Formschlüssige Verbindung | 52 | Spalt |
| 15 | Öse | | |
| 16 | Betätigungselement | | |
| 17 | Erstes Rastelement | | |
| 18 | Zweites Rastelement | | |
| 19 | Steg | | |
| 20 | Ausnehmung | | |
| 21 | Erstes Formschlusselement | | |
| 22 | Zweites Formschlusselement | | |
| 23 | Anlagesteg | | |
| 24 | Anlagefläche | | |
| 25 | Rastverbindung | | |
| 26 | Betätigungselement | | |
| 27 | Erstes Rastelement | | |
| 28 | Zweites Rastelement | | |
| 29 | Erweiterung | | |
| 30 | Öffnung | | |
| 31 | Einkerbung | | |
| 32 | Vorsprung | | |
| 33 | Betätigungsmechanismus | | |
| 34 | Befestigungselement | | |
| 35 | Strangelementende | | |
| 36 | Schlaufe | | |
| 37 | Vertiefung | | |
| 38 | Drehverbindung | | |
| 39 | Kante | | |
| 40 | Steg | | |
| 41 | Rampe | | |
| 42 | Weitere Ausnehmung | | |
| 43 | Erstes Strangelement | | |
| 44 | Zweites Strangelement | | |
| 45 | Erhebung | | |
| 46 | Erste Front | | |
| 47 | Zweite Front | | |

## Patentansprüche

1. Steckverschluss zum Verbinden flexibler und/oder starrer Strangelemente (43, 44), insbesondere einer Tierhalteleine, mit einem Steckteil (11) und einem Aufnahmeteil (12), wobei zum Herstellen einer lösbaren Verbindung des Steckteils (11) mit dem Aufnahmeteil (12) eine formschlüssige Verbindung (14) zum Übertragen einer Zugkraft und eine von der formschlüssigen Verbindung (14) separate Sicherung (13, 25) zum Verhindern eines unerwünschten Lösens der formschlüssigen Verbindung (14) vorgesehen ist, wobei die Sicherung (13, 25) einen Betätigungsmechanismus (33) zum Lösen der Sicherung (13, 25) hat, und für die formschlüssige Verbindung (14) zwei korrespondierend zueinander ausgebildete, starre Formschlusselemente (21, 22) vorgesehen sind, wobei das Steckteil (11) ein erstes Formschlusselement (21) und das Aufnahmeteil (12) ein zweites Formschlusselement (22) zum Zusammenwirken mit dem ersten Formschlusselement (21) hat, **dadurch gekennzeichnet, dass** innerhalb des Steckteils (11) ein Befestigungselement (34) zum Befestigen eines Endes eines Strangelementes (43) ist, wobei das Befestigungselement (34) in einer dem ersten Formschlusselement (21) zugeordneten Befestigungsaufnahme (50) zum Verdecken der Befestigung des Endes des Strangelementes (43) befestigbar ist.

2. Steckverschluss nach Anspruch 1, **dadurch gekennzeichnet, dass** das erste Formschlusselement (21) als ein starres Achselement und das zweite Formschlusselement (22) als eine starre Achselementaufnahme zum Zusammenwirken mit dem ersten Formschlusselement (21) ausgebildet ist.

3. Steckverschluss nach einem der vorhergehenden Ansprüche, **dadurch gekennzeichnet, dass** die Sicherung (13, 25) und/oder die formschlüssige Verbindung (14) durch ein mindestens teilweises Ineinanderschieben des Steckteils (11) in das Aufnahmeteil (12), insbesondere der beiden Formschlusselemente (21, 22), in eine Richtung quer, vorzugsweise rechtwinklig, zur Längsausrichtung des Steckverschlusses (10) und/oder quer zu einer Zugrichtung einer bei der vorgesehenen Benutzung auf den Steckverschluss (10) wirkenden Zugkraft herstellbar ist, wobei vorzugsweise das erste Formschlusselement (21) in das zweite Formschlusselement (22) einführbar und/oder mindestens teilweise durch einen Durchbruch einer Seitenwand des Aufnahmeteils (12) zum Bereitstellen einer Erhebung (45) durchführbar ist.

4. Steckverschluss nach Anspruch 2 oder 3, **dadurch gekennzeichnet, dass** die beiden Formschlusselemente (21, 22) eine unter Zugbelastung selbstzentrierende und/oder selbstsichernde Gestalt aufweisen, insbesondere hat das erste Formschlusselement (21) mindestens eine Einkerbung (31) und das zweite Formschlusselement (22) mindestens einen zu der Einkerbung (31) korrespondierend ausgebildeten Vorsprung (32), wobei vorzugsweise in der formschlüssigen Verbindung (14) die Einkerbung (31) mindestens teilweise den Vorsprung (32) hintergreift.

5. Steckverschluss nach einem der vorhergehenden Ansprüche, **dadurch gekennzeichnet, dass** das Steckteil (11) und/oder das erste Formschlusselement (21) in der formschlüssigen Verbindung (14) einen in Bezug zu dem Aufnahmeteil (12) nach innen versetzten Bereich zum Bereitstellen einer Vertiefung (37) und/oder einen nach außen versetzen Bereich zum Bereitstellen einer Erhebung (45) hat.

6. Steckverschluss nach einem der vorhergehenden Ansprüche, **dadurch gekennzeichnet, dass** die Sicherung (13, 25), insbesondere als eine separate Rastverbindung für die rein formschlüssige Verbindung (14), mindestens ein elastisch und/oder federnd gelagertes erstes Rastelement (17, 27) aufweist, das zum Herstellen der Sicherung (13, 25) mit einem korrespondierend zu dem ersten Rastelement (17, 27) ausgebildeten, insbesondere starren, zweiten Rastelement (18, 28) zusammenwirkt, wobei vorzugsweise das erste Rastelement (17, 27) dem Steckteil (11) und das zweite Rastelement (18, 28) dem Aufnahmeteil (12) zugeordnet ist.

7. Steckverschluss nach einem der vorhergehenden Ansprüche, **dadurch gekennzeichnet, dass** das Befestigungselement (34) in einem dem Aufnahmeteil (12) zugewandten Bereich ist.

8. Steckverschluss, nach einem der vorhergehenden Ansprüche, **dadurch gekennzeichnet, dass** das Steckteil (11) und/oder der Betätigungsmechanismus (33) mindestens ein elastisch gelagertes Betätigungselement (16, 26), insbesondere eine Druckfläche, zum Lösen der Sicherung (13, 25) hat, wobei vorzugsweise das Betätigungselement (16, 26) mit dem ersten Rastelement (17, 27) zum Lösen der Sicherung (13, 25) verbunden ist.

9. Steckverschluss nach einem der vorhergehenden Ansprüche 6 bis 8, **dadurch gekennzeichnet, dass** dem ersten Rastelement (17, 27) eine Rampe (51) und/oder dem zweiten Rastelement (18, 28) eine Rampe (41) zum Führen des ersten Rastelementes (17, 27) in eine Position zum Herstellen der Sicherung (13, 25), insbesondere als eine Rastverbindung, zugeordnet ist.

10. Tierhalteleine mit einem Steckverschluss (10) nach einem der vorhergehenden Ansprüche mit einer Leine (43), wobei ein erstes Ende der Leine (43) einer Halteeinrichtung zum Halten der Leine (43) und ein von dem ersten Ende abgewandtes zweites Ende der Leine (43) dem Steckteil (11) zugeordnet ist, vorzugsweise ist dem Aufnahmeteil (12) an einem von dem Steckteil (11) abgewandten Ende ein Beißgurt und/oder eine Halsbandschlaufe zugeordnet.

## Claims

1. Plug-in lock for connecting flexible and/or rigid strand elements (43, 44), in particular an animal restraining leash, with a plug-in part (11) and a receiving part (12), wherein for producing a releasable connection of the plug-in part (11) with the receiving part (12) a positive-locking connection (14) for transmitting a tensile force and a securing means (13, 25) that is separate from the positive-locking connection (14) are provided for preventing an unintentional release of the positive-locking connection (14), wherein the securing means (13, 25) has an actuating mechanism (33) for releasing the securing means (13, 25), and two rigid positive-locking elements (21, 22) that are designed to correspond to one another are provided for the positive-locking connection (14), wherein the plug-in part (11) has a first positive-locking element (21) and the receiving part (12) has a second positive-locking element (22) for cooperating with the first positive-locking element (21), **characterised in that** a fastening element (34) for fastening an end of a strand element (43) is inside the plug-in part (11), wherein the fastening element (34) can be fastened in a fastening recess (50) attached to the first positive-locking element (21) for concealing the fastening of the end of the strand element (43).

2. Plug-in lock according to claim 1, **characterised in that** the first positive-locking element (21) is designed as a rigid axial element and the second positive-locking element (22) is designed as a rigid axial element recess for cooperating with the positive-locking element (21).

3. Plug-in lock according to one of the preceding claims, **characterised in that** the securing means (13, 25) and/or the positive-locking connection (14) can be established by an at least partial insertion of the plug-in part (11) into the receiving part (12), in particular of both of the positive-locking elements (21, 22), in a direction transversely, preferably at right angles, to the longitudinal alignment of the plug-in lock (10) and/or transversely to the intended use of a pulling direction of a tensile force acting on the plug-in lock (10), wherein the first positive-locking element (21) is preferably insertable into the second positive-locking element (22) and/or is at least partly passable through an opening of a side wall of the receiving part (12) to provide a raised area (45).

4. Plug-in lock according to claim 2 or 3, **characterised in that** under a tensile load both of the positive-locking elements (21, 22) have a self-centring and/or self-securing design, in particular the first positive-locking element (21) has a notch (31) and the second positive-locking element (22) has a projection (32) designed to correspond to the notch (31), wherein preferably the notch (31) at least partly engages behind the projection (32) in the positive-locking connection.

5. Plug-in lock according to one of the preceding claims, **characterised in that** the plug-in part (11) and/or the first positive-locking element (21) in the positive-locking connection (14) has an area that is offset inwardly in relation to the receiving part (12) to provide a recess (37) and/or an area offset outwardly to provide a raised area (45).

6. Plug-in lock according to one of the preceding claims, **characterised in that** the securing means (13, 25), in particular as a separate locking connection for the pure positive-locking connection (14), possesses at least one elastically and/or spring mounted first locking element (17, 27) that in order to establish the securing means (13, 25) cooperates with an in particular rigid, second locking element (18, 28) corresponding to the first locking element (17, 27), wherein the first locking element (17, 27) is associated with the plug-in part (11) and the second locking element (18, 28) is associated with the receiving part (12).

7. Plug-in lock according to one of the preceding claims, **characterised in that** the fastening element (34) is in an area facing the receiving part (12).

8. Plug-in lock according to one of the preceding claims, **characterised in that** the plug-in part (11) and/or the actuating mechanism (33) has at least one elastically mounted actuating element (16, 26), in particular a pressing surface, for releasing the securing means (13, 25), wherein the actuating element (16, 26) is preferably connected to the first locking element (17, 27) for releasing the securing means (13, 25).

9. Plug-in lock according to one of the preceding claims 6 to 8, **characterised in that** a ramp (51) is associated with the first locking element (17, 27) and/or a ramp (41) is associated with the second locking element (18, 28) for guiding the first locking element (17, 27) into a position for establishing the securing means (13, 25), in particular as a locking connection.

10. Animal restraining leash with a plug-in lock (10) according to one of the preceding claims with a leash (43), wherein a first end of the leash (43) is associated with a restraint device for restraining the leash (43) and a second end of the leash (43) that faces away from the first end is associated with the plug-in part (11); a bite belt and/or a collar loop on an end that faces away from the plug-in part (11) is preferably associated with the receiving part (12).

## Revendications

1. Fermeture encliquetable pour la liaison d'éléments de brins flexibles et/ou rigides (43, 44), plus particulièrement d'une laisse pour animaux, avec une partie encliquetable (11) et une partie de logement (12), moyennant quoi, pour l'établissement d'une liaison amovible de la partie encliquetable (11) avec la partie de logement (12), une liaison par complémentarité de forme (14) est prévue pour la transmission d'une force de traction et une sécurité (13, 25), distincte de la liaison par complémentarité de forme (14), est prévue pour empêcher un détachement indésirable de la liaison par complémentarité de forme (14), la sécurité (13, 25) comprenant un mécanisme d'actionnement (33) pour le détachement de la sécurité (13, 25) et, pour la liaison par complémentarité de forme (14), deux éléments à complémentarité de forme rigides (21, 22) correspondant entre eux sont prévus, la partie encliquetable (11) comprenant un premier élément à complémentarité de forme (21) et la partie de logement (12) comprenant un deuxième élément de complémentarité de forme (22) qui interagit avec le premier élément à complémentarité de forme (21), **caractérisée en ce que**, à l'intérieur de la partie encliquetable (11) se trouve un élément de fixation (34) pour la fixation d'une extrémité d'un élément de brin (43), l'élément de fixation (34) pouvant être fixé dans un logement de fixation (50) correspondant au premier élément de complémentarité de forme (21) pour le recouvrement de la fixation de l'extrémité de l'élément de brin (43).

2. Fermeture encliquetable selon la revendication 1, **caractérisée en ce que** le premier élément de complémentarité de forme (21) est conçu comme un élément d'axe rigide et le deuxième élément de complémentarité de forme (22) est conçu comme un logement d'élément d'axe rigide qui interagit avec le premier élément de complémentarité de forme (21).

3. Fermeture encliquetable selon l'une des revendications précédentes, **caractérisée en ce que** la sécurité (13, 25) et/ou la liaison par complémentarité de forme (14) peut être établie par un coulissement au moins partiel de la partie encliquetable (11) dans la partie de logement (12), plus particulièrement des deux éléments de complémentarité de forme (21, 22), dans une direction transversale, de préférence perpendiculaire, à l'orientation longitudinale de la fermeture encliquetable (10) et/ou transversalement par rapport à une direction de traction d'une force de traction agissant sur la fermeture encliquetable (10) lors de l'utilisation prévue, de préférence le premier élément de complémentarité de forme (21) pouvant être introduit dans le deuxième élément de complémentarité de forme (22) et/ou pouvant être passée au moins partiellement à travers un passage d'une paroi latérale de la partie de logement (12) pour la mise à disposition d'un bossage (45).

4. Fermeture encliquetable selon la revendication 2 ou 3, **caractérisée en ce que** les deux éléments de complémentarité de forme (21, 22) présentent une conception autocentrée et/ou autobloquante sous une charge de traction, plus particulièrement le premier élément de complémentarité de forme (21) comprend au moins une encoche (31) et le deuxième élément de complémentarité de forme (22) comprend au moins une saillie (32) conçue de manière correspondante à l'encoche (31), de préférence l'encoche (31) s'accrochant au moins partiellement par-derrière dans la liaison par complémentarité de forme (14).

5. Fermeture encliquetable selon l'une des revendications précédentes, **caractérisée en ce que** la partie encliquetable (11) et/ou le premier élément de complémentarité de forme (21) comprend, dans la liaison par complémentarité de forme (14) une zone décalée vers l'intérieur par rapport à la partie de logement (12) pour la mise à disposition d'un creux (37) et/ou une zone décalée vers l'extérieur pour la mise à disposition d'un bossage (45).

6. Fermeture encliquetable selon l'une des revendications précédentes, **caractérisée en ce que** la sécurité (13, 25), plus particulièrement en tant que liaison par encliquetage séparée pour la liaison purement par complémentarité de forme (14), comprend au moins un premier élément d'encliquetage (17, 27), logé de manière élastique et/ou amortie, qui interagit, pour l'établissement de la sécurité (13, 25), avec un deuxième élément d'encliquetage (18, 28), plus particulièrement rigide, correspondant au premier élément d'encliquetage (17, 27), de préférence le premier élément d'encliquetage (17, 27) correspondant à la partie encliquetable (11) et le deuxième élément d'encliquetage (18, 28) correspondant à la partie de logement (12).

7. Fermeture encliquetable selon l'une des revendications précédentes, **caractérisée en ce que** l'élément de fixation (34) se trouve dans une zone orientée vers la partie de logement (12).

8. Fermeture encliquetable selon l'une des revendications précédentes, **caractérisée en ce que** la partie encliquetable (11) et/ou le mécanisme d'actionnement (33) comprend au moins un élément d'actionnement (16, 26), logé de manière élastique, plus particulièrement une surface de pression, pour le détachement de la sécurité (13, 25), de préférence l'élément d'actionnement (16, 26) étant relié avec le premier élément d'encliquetage (17, 27) pour le détachement de la sécurité (13, 25).

9. Fermeture encliquetable selon l'une des revendications 6 à 8, **caractérisée en ce qu'**une rampe (51) correspond au premier élément d'encliquetage (17, 27) et/ou une rampe (41) correspond au deuxième élément d'encliquetage (18, 28), pour le guidage du premier élément d'encliquetage (17, 27) vers une position pur l'établissement de la sécurité (13, 25), plus particulièrement sous la forme d'une liaison d'encliquetage.

10. Laisse pour animaux avec une fermeture encliquetable (10) selon l'une des revendications précédentes, avec une laisse (43), une première extrémité de la laisse (43) correspondant à un dispositif de maintien pour le maintien de la laisse (43) et une deuxième extrémité de la laisse (43), opposée à la première extrémité, correspondant à partie encliquetable (11), de préférence une sangle et/ou une boucle de collier correspondant à la partie de logement (12) au niveau d'une extrémité opposée à la partie encliquetable (11).
